(19) Europäisches Patentamt
European Patent Office
Office européen des brevets

(11) **EP 4 467 325 B1**

(12) **EUROPEAN PATENT SPECIFICATION**

(45) Date of publication and mention
of the grant of the patent:
**13.05.2026 Bulletin 2026/20**

(21) Application number: **23209926.7**

(22) Date of filing: **14.11.2023**

(51) International Patent Classification (IPC):
***B29C 65/18*** *(2006.01)*

(52) Cooperative Patent Classification (CPC):
**B29C 66/1122; B29C 65/18; B29C 66/723;
B29C 66/73921; B29C 66/8225; B29C 66/82265;
B29C 66/8242; B29C 66/8246; B29C 66/83221;
B29C 66/8511;** B29C 66/8167; B29L 2031/7128

(54) **MULTI-PURPOSE SEALING MODULE FOR PLASTIC FILM BASED BAGS**

MEHRZWECKSIEGELMODUL FÜR BEUTEL AUF KUNSTSTOFFFOLIENBASIS

MODULE DE SCELLAGE POLYVALENT POUR SACS À BASE DE FILM PLASTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.05.2023 IN 202321035328**

(43) Date of publication of application:
**27.11.2024 Bulletin 2024/48**

(73) Proprietor: **Mamata Machinery Limited
Ahmedabad Gujarat 382213 (IN)**

(72) Inventors:
• **MISTRY, Hemang Rameshchandra
380051 Ahmedabad (IN)**
• **PITHAVA, Janak Keshavlal
380050 Ahmedabad (IN)**

(74) Representative: **Keltie LLP
No. 1 London Bridge
London SE1 9BA (GB)**

(56) References cited:
**EP-A1- 3 374 153     AT-A2- 502 740**

## Description

### FIELD OF THE INVENTION

The current invention relates to high speed machines to manufacture heat-sealed plastic film based bags and pouches. The present invention more particularly relates to multi-purpose sealing modules for high speed machines for manufacturing heat-sealed plastic film based bags and pouches.

### PRIOR ART AND THE PROBLEM TO BE SOLVED

Plastic converting and flexible packaging industries are mainly engaged with producing plastic bags and pouches that have light weight, good strength, durability, are cost-effective and environmentally friendly. Plastic bags and pouches are used for containing and transporting goods such as foods produce, powders, magazines, chemicals, waste, etc.

Conventionally, plastic bags and pouches are made by heat-sealing, where two heated sealing jaws are brought in close proximity or contact with the plastic films to be joined that may be multi-structured or even laminated and pressing them in a controlled manner for certain time period.

Depending on the sealing requirement, either both the sealing jaws have open-close movement or only one sealing jaw is moved and another sealing jaw remains fixed and act as seal base. Sealing jaw movement is conventionally achieved by pneumatic cylinder actuation; motorized ball screw movement; timing belt-pulley drive; or a variety of mechanical linkages.

Plastic material has poor thermal conductivity. Therefore, for sealing to take place between two inside layers of plastic films, energy has to flow from the outer layers in contact with the sealing jaws to the inner layers where sealing occurs. If the process is not carried out precisely, it deteriorates or damages the appearance of the pouch/bag in the sealing area, producing bad pouches/bags. Pouches/bags with clear seal finish and leak proof sealing are the industry's requirements.

US Patent No. 6,550,255 B1 discloses a method and apparatus for obtaining individual web sections from a web of sheet material. In the invention disclosed therein, pressure and possibly heat is applied by means of blocks to opposite faces of an end portion of each flattened bag length as it passes through a sealing station. The heater bars disclosed therein are mounted on lightly spring loaded mounting blocks. Deflection of springs does not remain consistent for a long period especially, after high speed use. As a result, the quality of the bags produced is compromised. Also, for different material of the sheet, mechanical adjustments have to be made to the apparatus.

US Patent Application No. 2022/0242080 A1 discloses a bag making machine and bag making method wherein a heat-generating head of a sealing device is reciprocated *via* a link member and thermally fuses the multi-layer film. Such mechanism having a link member reciprocating the sealing device requires mechanical adjustments to be made to the machine for different material of the film.

US Patent No. 4,753,629 discloses a thermoplastic film heat bonding apparatus wherein reciprocating motion of a heated seal bar is supported by a support member with a resilient coupling between the support member and the heated seal bar. The resilience of such couplings does not remain consistent for a long period especially, after high speed use. As a result, the quality of the bags produced is compromised. Also, for different material of the sheet, mechanical adjustments have to be made to the apparatus.

EP 3 374 153 A1 discloses a bag-forming apparatus comprising a pair of opposed sealing bars positioned on opposite sides of a forming plane. Each sealing bar is mounted on a guide arm that extends from a first end, through the forming plane, to a second end. The guide arms are movably mounted to a frame, and a drive shaft is connected to the second end of each arm. Rotation of the shaft moves the sealing bars into and out of engagement with a web of bag-forming material traveling therebetween in the forming plane. The drive shaft can be translatable relative to the mounting frame to adjust a closure gap between the pair of opposed sealing bars.

AT 502 740 A2 discloses a device for filling, closing and separating containers containing bulk material from a tubular structure of thermoweldable sheet arranged concentrically to a supply conduit for the bulk material, comprising means for controlled lowering of the tubular structure on the outside of the conduit, two welding bars provided with cutting means supported by respective movable slides on respective guides for sliding in a plane orthogonal to the axis of the conduit, below its end, and means for conferring said reciprocating slides in a reciprocal movement, comprising said means two parallel crazy trees orthogonal to the guides and linked to rotate together, each supporting at least one cam having a profile symmetrical with that of the cam supported by the other shaft, each slide comprising at least one cam follower slidable on the cam of the nearest tree.

Hence, there is a need for a multi-purpose sealing module that has consistency in producing sealed pouches, where repeatability of the process can be achieved accurately and where maintaining control parameters such as seal temperature, seal pressure and seal time can be established precisely.

The present invention does not use any spring or resilient coupling and does not require any mechanical adjustments to the machine with change in the material of the plastic film or the rate at which plastic bags or pouches need to be produced and at the same time provides repeatability while eliminating initial wastage that conventionally accompanies trial and error before high speed manufacturing can be begun with every change. In other words, with the present invention, sealing pressure and time can easily be altered with no mechanical adjustment to the machine, thereby improving efficiency and repeatability.

## OBJECTS OF THE INVENTION

An object of the present invention is to efficiently select critical sealing process parameters for heat-sealing a variety of plastic substrates and films.

Another object of the present invention is to permit low sealing temperature to manufacture plastic bags and pouches from heat sensitive film.

Further object of the present invention is to use controlled linear movement of the sealing jaws to control the sealing impact.

Yet another object of the present invention is to use high force generation capability for high sealing pressure requirement using the multi-purpose sealing module.

An additional object of the present invention is to efficiently manufacture heat-sealed plastic film based bags and pouches with repeatability.

## SUMMARY OF THE INVENTION

The present invention discloses a multi-purpose sealing module for a machine to manufacture heat-sealed plastic film based bags and pouches. In the said module, a common drive shaft is driven by a servo motor. The common drive shaft has a keyways on it. An upper seal beam and a lower seal beam are parts of the said module and linearly move towards or away from each other in a controlled manner permitting desired and precise gaps in between sealing jaws mounted on each of the two seal beams. The plastic film is conventionally transported to the said gap for heat-sealing and after heat-sealing, transported further.

The upper seal beam is rigidly connected with linear guide rods at both the ends. Conventionally, at such connection, a spring or a resilient coupling is used; however, the present invention, instead, has a rigid connection thereat. The said linear guide rods pass through holes in the lower seal beam to guide movement of the lower seal beam.

The upper seal beam and the lower seal beam move linearly towards or away from each other. Such linear movement results from conversion of angular movement of the common drive shaft into the said linear movement using crank and crank arm arrangements at four places: two for the upper seal beam and two for the lower seal beam.

The servo motor driven common drive shaft has keyed connections with two eccentric cams for the upper seal beam and two eccentric cams for the lower seal beam. The eccentricity of the common drive shaft with the eccentric cams for the upper seal beam is equal to and in opposite direction from the eccentricity of the common drive shaft with the eccentric cams for the lower seal beam.

For each of the four eccentric cams, there is a crank arm. Thus, there are two crank arms for the eccentric cams for the upper seal beam and likewise, there are two crank arms for the eccentric cams for the lower seal beam. The connection of each crank arm with its eccentric cam is through a bearing. Thus, servo motor driven angular movement of the common drive shaft which is in keyed connection with the eccentric cams will be converted into linear movement of the crank arms. Selectively, the said angular movement of the common drive shaft can be less than 360 degree angular rotation or a full 360 degree rotation. It can be discerned that whatever the angular movement is selected, it will be in opposite direction for the eccentric cams for the upper seal beam and the eccentric cams for the lower seal beam.

The crank arms for the upper seal beam are connected to the linear guide rods through bearings and the crank arms for the lower seal beam are connected to connecting rods which are rigidly connected to the lower seal beam.

Therefore, angular movement of the common drive shaft gives simultaneous linear movement in opposite directions to the upper seal beam and the lower seal beam. The gap between the sealing jaw connected to the upper seal beam and the sealing jaw connected to the lower seal beam is thus controlled. Seal time and seal pressure of sealing of the plastic film based bags and pouches; and angular movement of the common drive shaft are controlled by a programmable controller. For different thicknesses of the plastic film or for different materials of the plastic film, suitable seal time, seal pressure, and angular movement of the common drive shaft data available to the machine operator can be selected using the controller.

It would be evident to a person skilled in the art that the present invention is applicable equally to a machine wherein the plastic film is transported vertically as opposed to horizontally. In other words, the same inventive concept disclosed herein can be used in a machine to manufacture plastic film based bags and pouches when the plastic film is fed vertically. In such machines, instead of upper and lower beams, front and rear beams would be used while retaining the concept of converting angular movement of a common drive shaft into linear movement using crank and crank arm arrangements at four places: two for the front seal beam and two for the rear seal beam.

## BRIEF DESCRIPTION OF THE DRAWINGS

Fig. 1 shows a machine for manufacturing plastic film based bags and pouches in accordance with the present invention where the plastic film is in horizontal position.

Fig. 2 shows main components of the multi-purpose sealing module for the machine in Fig. 1.

Fig. 3 shows a machine for manufacturing plastic film based bags and pouches in accordance with the present invention where the plastic film is in vertical position.

Fig. 4 shows main components of the multi-purpose sealing module for the machine in Fig. 3.

Fig. 5 shows linear movement of crank arms in relation to angular movement of eccentric cams of the multi-purpose sealing modules shown in Fig. 2 and 4.

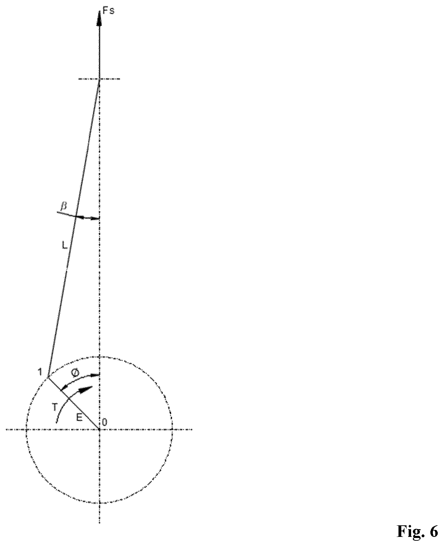

Fig. 6 shows calculation of force generated at the end of crank arms in multi-purpose sealing module due to applied torque on common drive shaft with reference to angular movement of the common drive shaft.

## DETAILED DESCRIPTION OF THE INVENTION

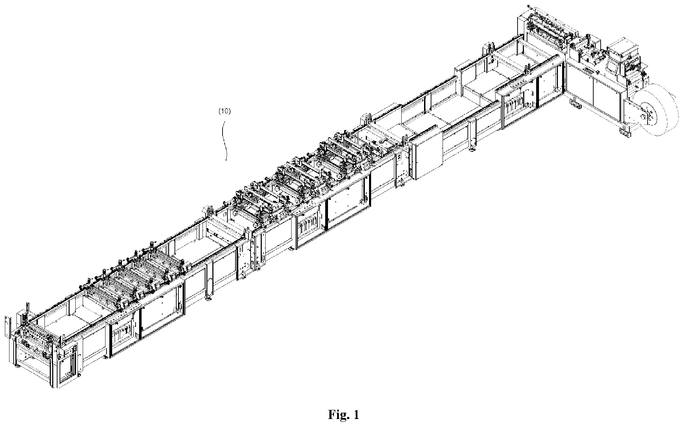

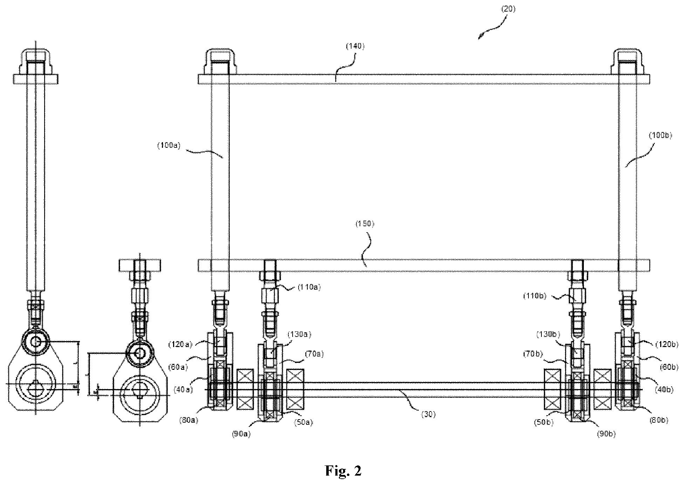

The present invention discloses a multi-purpose sealing module (20) shown in Fig. 2 for a machine (10) shown in Fig. 1 to manufacture heat-sealed plastic film based bags and pouches. In the said module (20), a common drive shaft (30) is driven by a servo motor (not shown). The common drive shaft (30) has a keyways on it. An upper seal beam (140) and a lower seal beam (150) are parts of the said module (20) and linearly move towards or away from each other in a controlled manner permitting desired and precise gaps in between sealing jaws (not shown) mounted on each of the two seal beams (140, 150). The plastic film is conventionally transported to the said gap for heat-sealing and after heat-sealing, transported further.

The upper seal beam (140) is rigidly connected with linear guide rods (100a, 100b) at both the ends. Conventionally, at such connection, a spring or a resilient coupling is used; however, the present invention, instead, has a rigid connection thereat. The said linear guide rods (100a, 100b) pass through holes in the lower seal beam (150) to guide movement of the lower seal beam (150).

The upper seal beam (140) and the lower seal beam (150) move linearly towards or away from each other. Such linear movement results from conversion of angular movement of the common drive shaft (30) into the said linear movement using crank and crank arm arrangements at four places: two for the upper seal beam (140) and two for the lower seal beam (150).

The servo motor driven common drive shaft (30) has keyed connections with two eccentric cams (40a, 40b) for the upper seal beam (140) and two eccentric cams (50a, 50b) for the lower seal beam (150). The eccentricity of the eccentric cams (40a, 40b) for the upper seal beam (140) is equal to and in opposite direction from the eccentricity of the eccentric cams (50a, 50b) for the lower seal beam (150).

For each of the four eccentric cams, there is a crank arm. Thus, there are two crank arms (60a, 60b) for the eccentric cams (40a, 40b) for the upper seal beam (140) and likewise, there are two crank arms (70a, 70b) for the eccentric cams (50a, 50b) for the lower seal beam (150). The connection of each crank arm with its eccentric cam is through a bearing. Thus, connection of crank arm (60a) with eccentric cam (40a) is through bearing (80a) and connection of crank arm (60b) with eccentric cam (40b) is through bearing (80b) for the upper seal beam (140) and similarly, connection of crank arm (70a) with eccentric cam (50a) is through bearing (90a) and connection of crank arm (70b) with eccentric cam (50b) is through bearing (90b).

The servo motor (not shown) driven angular movement of the common drive shaft (30) which is in keyed connection with the eccentric cams will be converted into linear movement of the crank arms. Selectively, the said angular movement of the common drive shaft (30) can be less than 360 degree angular rotation or a full 360 degree rotation. It can be discerned that whatever the angular movement is selected, it will be in opposite direction for the eccentric cams (40a, 40b) for the upper seal beam (140) and the eccentric cams (50a, 50b) for the lower seal beam (150).

The crank arms (60a, 60b) for the upper seal beam (140) are connected to the linear guide rods (100a, 100b) through bearings (120a, 120b) and the crank arms (70a, 70b) for the lower seal beam (150) are connected to connecting rods (110a, 110b) which are rigidly connected to the lower seal beam (150).

Therefore, angular movement of the common drive shaft (300 gives simultaneous linear movement in opposite directions to the upper seal beam (140) and the lower seal beam (150). The gap between the sealing jaw (not shown) connected to the upper seal beam (140) and the sealing jaw (not shown) connected to the lower seal beam (150) is thus controlled. Seal time and seal pressure of sealing of the plastic film based bags and pouches; and angular movement of the common drive shaft (30) are controlled by a programmable controller. For different thicknesses of the plastic film or for different materials of the plastic film, suitable seal time, seal pressure, and angular movement of the common drive shaft (30) data available to the machine operator can be selected using the controller.

The common drive shaft (30) can be driven by pneumatic rotary actuators (not shown) instead of servo motor (not shown). The common drive shaft (30) can be connected with eccentric cams (40a, 40b) and eccentric cams (50a, 50b) using clamping bushes (not shown) instead of the keyed connection described above in which case, the common drive shaft (30) need not have a keyways on it.

It would be evident to a person skilled in the art that the present invention is applicable equally to a machine wherein the plastic film is transported vertically as opposed to horizontally. In other words, the same inventive concept disclosed herein can be used in a machine to manufacture plastic film based bags and pouches when the plastic film is fed vertically. In such machines, instead of upper and lower beams, front and rear beams would be used while retaining the concept of converting angular movement of a common drive shaft into linear movement using crank and crank arm arrangements at four places: two for the front seal beam and two for the rear seal beam.

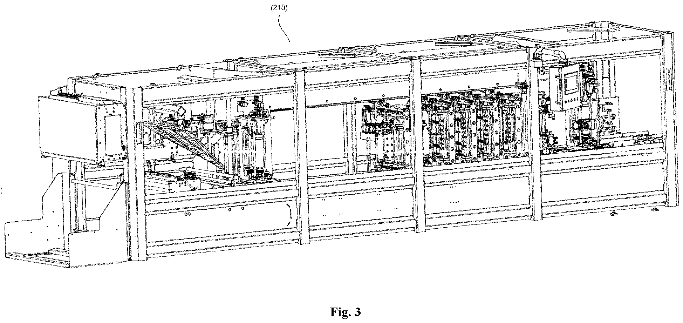

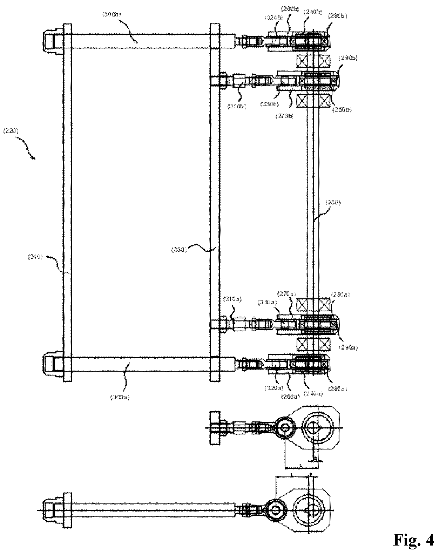

The present invention discloses a multi-purpose sealing module (220) shown in Fig. 4 for a machine (210) shown in Fig. 3 to manufacture heat-sealed plastic film based bags and pouches. In the said module (220), a common drive shaft (230) is driven by a servo motor (not shown). The common drive shaft (230) has a key throughout its length. An front seal beam (340) and a rear seal beam (350) are parts of the said module (220) and linearly move towards or away from each other in a controlled manner permitting desired and precise gaps in between sealing jaws (not shown) mounted on each of the two seal beams (340, 350). The plastic film is conventionally transported to the said gap for heat-sealing and after heat-sealing, transported further.

The front seal beam (340) is rigidly connected with linear guide rods (300a, 300b) at both the ends. Conventionally, at such connection, a spring or a resilient coupling is used; however, the present invention, instead, has a rigid connection thereat. The said linear guide rods (300a, 300b) pass through holes in the rear seal beam (350) to guide movement of the rear seal beam (350).

The front seal beam (340) and the rear seal beam (350) move linearly towards or away from each other. Such linear movement results from conversion of angular movement of the common drive shaft (230) into the said linear movement using crank and crank arm arrangements at four places: two for the front seal beam (340) and two for the rear seal beam (350).

The servo motor driven common drive shaft (230) has keyed connections with two eccentric cams (240a, 240b) for the front seal beam (340) and two eccentric cams (250a, 250b) for the rear seal beam (350). The eccentricity of the eccentric cams (240a, 240b) for the front seal beam (340) is equal to and in opposite direction from the eccentricity of the eccentric cams (250a, 250b) for the rear seal beam (350).

For each of the four eccentric cams, there is a crank arm. Thus, there are two crank arms (260a, 260b) for the eccentric cams (240a, 240b) for the front seal beam (340) and likewise, there are two crank arms (270a, 270b) for the eccentric cams (250a, 250b) for the rear seal beam (350). The connection of each crank arm with its eccentric cam is through a bearing. Thus, connection of crank arm (260a) with eccentric cam (240a) is through bearing (280a) and connection of crank arm (260b) with eccentric cam (240b) is through bearing (280b) for the front seal beam (340) and similarly, connection of crank arm (270a) with eccentric cam (250a) is through bearing (290a) and connection of crank arm (270b) with eccentric cam (250b) is through bearing (290b).

The servo motor (not shown) driven angular movement of the common drive shaft (230) which is in keyed connection with the eccentric cams will be converted into linear movement of the crank arms. Selectively, the said angular movement of the common drive shaft (230) can be less than 360 degree angular rotation or a full 360 degree rotation. It can be discerned that whatever the angular movement is selected, it will be in opposite direction for the eccentric cams (240a, 240b) for the front seal beam (340) and the eccentric cams (250a, 250b) for the rear seal beam (350).

The crank arms (260a, 260b) for the front seal beam (340) are connected to the linear guide rods (300a, 300b) through bearings (320a, 320b) and the crank arms (270a, 270b) for the rear seal beam (350) are connected to connecting rods (310a, 310b) which are rigidly connected to the rear seal beam (350).

Therefore, angular movement of the common drive shaft (230) gives simultaneous linear movement in opposite directions to the front seal beam (340) and the rear seal beam (350). The gap between the sealing jaw (not shown) connected to the front seal beam (340) and the sealing jaw (not shown) connected to the rear seal beam (350) is thus controlled. Seal time and seal pressure of sealing of the plastic film based bags and pouches; and angular movement of the common drive shaft (230) are controlled by a programmable controller. For different thicknesses of the plastic film or for different materials of the plastic film, suitable seal time, seal pressure, and angular movement of the common drive shaft (230) data available to the machine operator can be selected using the controller.

The common drive shaft (230) can be driven by pneumatic rotary actuators (not shown) instead of servo motor (not shown). The common drive shaft (230) can be connected with eccentric cams (240a, 240b) and eccentric cams (250a, 250b) using clamping bushes (not shown) instead of the keyed connection described above in which case, the common drive shaft (230) need not have a keyways on it.

## BEST METHOD OF PERFORMING THE INVENTION

The best method of performing the present invention is with the multi-purpose sealing module (20) shown in Fig. 2 for a machine (10) shown in Fig. 1.

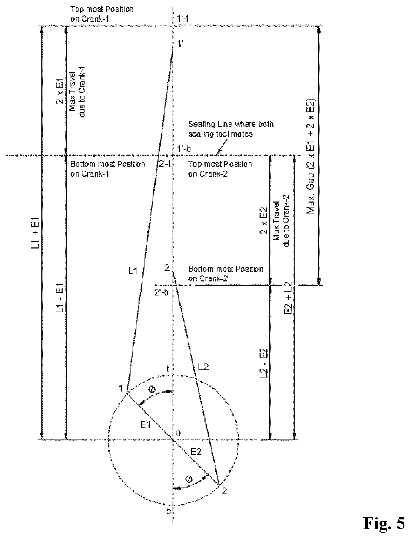

Referring to Fig. 5 which shows linear movement of crank arms (60a, 60b) and crank arms (70a, 70b) in relation to angular movement of eccentric cams (40a, 40b) and eccentric cams (50a, 50b) of the multi-purpose sealing module (20) shown in Fig. 2. As a person skilled in the art will readily understand, what is explained in Fig. 5 is applicable also to linear movement of crank arms (260a, 260b) and crank arms (270a, 270b) in relation to angular movement of eccentric cams (240a, 240b) and eccentric cams (250a, 250b) of the multi-purpose sealing module (220) shown in Fig. 4.

In Fig. 5, E1 represents the eccentricity between the common drive shaft (30) and the eccentric cams (40a, 40b) and L1 represents the length of the crank arms (60a, 60b). Similarly, E2 represents the eccentricity between the common drive shaft (30) and the eccentric cams (50a, 50b) and L2 represents the length of the crank arms (70a, 70b). Angular movement of the common drive shaft (30) is represented by Ø, referred to as the crank angle.

At crank angle Ø = 0 degree, the upper seal beam (140) will be at its topmost position (1'-t) as shown in Fig. 5 and the lower seal beam (150) will be at its bottommost position (2'-b). This can be termed as maximum gap position or home position. At crank angle Ø = 180 degrees, upper seal beam (140) will be at its bottommost position (1'-b) and lower seal beam (150) will be at its topmost position (2'-t). This can be termed as no gap position or sealing position. 1' and 2' are the intermediate positions of the upper seal beam (140) and the lower seal beam (150) respectively for angular movement Ø degree of the eccentric cams (40a, 40b) and the eccentric cams (50a, 50b) mounted on the common drive shaft (30). Distance between 1' and 2' is the live gap between the upper seal beam (140) and the lower sealing beam (150) for particular crank angle Ø. Linear downward movement of the upper seal beam (140) in reference to crank angle Ø derives from following equation,

$$E1 \times (1 - COS\ Ø) + (L1 \times (1 - COS\ (SIN\text{-}1(E1 \times SIN\ Ø\ /\ L1))))$$

Linear upward movement of the lower sealing beam (150) in reference to crank angle Ø derives from following equation,

$$E2 \times (1\text{-}COS\ Ø) + (L2 \times COS\ (SIN\text{-}1(E2 \times SIN\ Ø\ /\ L2))\text{-}1)$$

As shown in Fig. 8, force is generated at the end of crank arms (60a, 60b) and crank arms (70a, 70b) in multi-purpose sealing module(20) due to applied torque on the common drive shaft (30) with reference to eccentric cams (40a, 40b) and eccentric cams (50a, 50b) and angular movement Ø. This value corresponds to the capability of the sealing force generated at particular angular movement Ø.

Calculation of force generated the end of the end of crank arms (60a, 60b) and crank arms (70a, 70b) with reference to the various crank angles Ø derives from following equation,

$$T\ /\ (E \times COS\ Ø + L \times COS\ β)\ /\ TAN\ β$$

Where, T = Torque applied by Drive Shaft; and
β = Angle of Crank Rod with motion line

Crank angle Ø from the required Gap between the upper seal beam (140) and the lower seal beam (150) in the multi-purpose sealing module (20) can be calculated. For processing different types of plastic films, a Gap or the opening between the upper seal beam (140) and the lower seal beam (150) may be required to be set in the multi-purpose sealing module (20). For heat sensitive films, gap requirement is higher to keep the heated seal beams away from the plastic film during non-sealing durations. Narrow Gap opening feature makes the multi-purpose sealing module (20) suitable to be operated at a high speed.

Calculation of Crank Degree Ø from the required Gap G as input derives from the following equation,

$$COS^{-1}(1 - G / 2 / E)$$

Seal time and seal pressure of sealing of plastic film based bags and pouches; and angular movement of the drive shaft (30) are controlled by a programmable controller (not shown).

Example 1

In Example 1, the upper Seal beam (140) linear movement and lower seal beam (150) linear movement against each degree of angular movement Ø of the eccentric cams (40a, 40b) with 10mm of eccentricity values for E1 and E2 and 72mm as lengths L1 and L2 of crank arms (60a, 60b) are considered. Linear movements are tabulated in the attached Table-1 (for 0 to 180 degree) and Table-2 (for 180 to 360 degree).

Table-1

| Crank Angle | Top Sealer Down by | Bottom Sealer Up by | Gap |
|---|---|---|---|
| Φ | 1'-t > 1' | 2'-b > 2' | |
| 0 | 0.0000 | 0.0000 | 40.000 |
| 1 | 0.0017 | 0.0013 | 39.997 |
| 2 | 0.0069 | 0.0052 | 39.988 |
| 3 | 0.0156 | 0.0118 | 39.973 |
| 4 | 0.0277 | 0.0210 | 39.951 |
| 5 | 0.0433 | 0.0328 | 39.924 |
| 6 | 0.0624 | 0.0472 | 39.890 |
| 7 | 0.0849 | 0.0642 | 39.851 |
| 8 | 0.1108 | 0.0839 | 39.805 |
| 9 | 0.1401 | 0.1061 | 39.754 |
| 10 | 0.1729 | 0.1310 | 39.696 |
| 11 | 0.2090 | 0.1584 | 39.633 |
| 12 | 0.2485 | 0.1885 | 39.563 |
| 13 | 0.2914 | 0.2211 | 39.487 |
| 14 | 0.3377 | 0.2564 | 39.406 |
| 15 | 0.3673 | 0.2942 | 39.319 |
| 16 | 0.4402 | 0.3346 | 39.225 |
| 17 | 0.4963 | 0.3776 | 39.126 |
| 18 | 0.5558 | 0.4231 | 39.021 |
| 19 | 0.6185 | 0.4712 | 38.910 |
| 20 | 0.6844 | 0.5218 | 38.794 |
| 21 | 0.7534 | 0.5750 | 38.672 |
| 22 | 0.8257 | 0.6306 | 38.544 |
| 23 | 0.9011 | 0.6889 | 38.410 |
| 24 | 0.9795 | 0.7496 | 38.271 |
| 25 | 1.0611 | 0.8128 | 3B.126 |
| 26 | 1.1456 | 0.8785 | 37.976 |
| 27 | 1.2332 | 0.9467 | 37.820 |
| 28 | 1.3237 | 1.0173 | 37.659 |

(continued)

| Crank Angle | Top Sealer Down by | Bottom Sealer Up by | Gap |
|---|---|---|---|
| Φ | 1'-t > 1' | 2'-b > 2' | |
| 29 | 1.4172 | 1.0904 | 37.492 |
| 30 | 1.5136 | 1.1659 | 37.321 |
| 31 | 1.6128 | 1.2439 | 37.143 |
| 32 | 1.7148 | 1.3242 | 36.961 |
| 33 | 1.8196 | 1.4070 | 36.773 |
| 34 | 1.9271 | 1.4921 | 36.581 |
| 35 | 20373 | 1.5797 | 36.383 |
| 36 | 2.1502 | 1.6695 | 36.180 |
| 37 | 2.2656 | 1.7617 | 35.973 |
| 38 | 2.3836 | 1.8562 | 35.760 |
| 39 | 2.5041 | 1.9530 | 35.543 |
| 40 | 2.6271 | 2.0521 | 35.321 |
| **41** | 2.7524 | 2.1534 | 35.094 |
| 42 | 2.8802 | 2.2569 | 34.863 |
| 43 | 3.0102 | 2.3627 | 34.627 |
| 44 | 3.1425 | 2.4707 | 34.387 |
| 45 | 3.2770 | 2.5809 | 34.142 |
| 46 | 3.4137 | 2.6932 | 33.893 |
| 47 | 3.5524 | 2.8076 | 33.640 |
| 48 | 3.6932 | 2.9242 | 33.383 |
| 49 | 3.8360 | 3.0428 | 33.121 |
| 50 | 3.9808 | 3.1634 | 32.856 |
| 51 | 4.1274 | 3.2862 | 32.586 |
| 52 | 4.2759 | 3.4109 | 32.313 |
| 53 | 4.4262 | 3.5375 | 32.036 |
| 54 | 4.5781 | 3.6662 | 31.756 |
| 55 | 4.7317 | 3.7967 | 31.472 |
| 56 | 4.8870 | 3.9292 | 31.184 |
| 57 | 5.0437 | 4.0635 | 30.893 |
| 58 | 5.2020 | 4.1996 | 30.598 |
| 59 | 5.3617 | 4.3376 | 30.301 |
| 60 | 5.5227 | 4.4773 | 30.000 |
| 61 | 5.6851 | 4.6187 | 29.696 |
| 62 | 5.8487 | 4.7618 | 29.389 |
| 63 | 6.0135 | 4.9067 | 29.080 |
| 64 | 6.1795 | 5.0531 | 28.767 |
| 65 | 6.3465 | 5.2011 | 28.452 |
| 66 | 6.5145 | 5.3507 | 28.135 |

(continued)

| Crank Angle | Top Sealer Down by | Bottom Sealer Up by | Gap |
|---|---|---|---|
| Φ | 1'-t > 1' | 2'-b > 2' | |
| 67 | 6.6835 | 5.5018 | 27815 |
| 68 | 6.8534 | 5.6544 | 27.492 |
| 69 | 7.0241 | 5.8085 | 27.167 |
| 70 | 7.1956 | 5.9640 | 26.840 |
| 71 | 7.3679 | 6.1208 | 26.511 |
| 72 | 7.5407 | 6.2789 | 26.180 |
| 73 | 7.7142 | 6.4384 | 25.847 |
| 74 | 7.8882 | 6.5991 | 25.513 |
| 75 | 8.0627 | 6.7609 | 25.176 |
| 76 | 8.2376 | 6.9240 | 24.838 |
| 77 | 8.4128 | 7.0881 | 24.499 |
| 78 | 8.5884 | 7.2534 | 24.158 |
| 79 | 8.7642 | 7.4196 | 23.816 |
| 80 | 8.9402 | 7.5868 | 23.473 |
| 81 | 9.1163 | 7.7550 | 23.129 |
| 82 | 9.2925 | 7.9240 | 22.783 |
| 83 | 9.4687 | 8.0939 | 22.437 |
| 84 | 9.6449 | 8.2646 | 22.091 |
| 85 | 9.8209 | 8.4359 | 21.743 |
| 86 | 9.9968 | 8.6080 | 21.395 |
| 87 | 10.1725 | 8.7807 | 21.047 |
| 88 | 10.3480 | 8.9540 | 20.698 |
| 89 | 10.5231 | 9.1279 | 20349 |
| 90 | 10.6978 | 9.3022 | 20.000 |
| 91 | 10.8721 | 9.4769 | 19.651 |
| 92 | 11.0460 | 9.6520 | 19.302 |
| 93 | 11.2193 | 9.8275 | 18.953 |
| 94 | 11.3920 | 10.0032 | 18.605 |
| 95 | 11.5641 | 10.1791 | 18.257 |
| 96 | 11.7354 | 10.3551 | 17.909 |
| 97 | 11.9061 | 10.5313 | 17.563 |
| 98 | 12.0760 | 10.7075 | 17.217 |
| 99 | 12.2450 | 10.8837 | 16.871 |
| 100 | 12.4132 | 11.0598 | 16.527 |
| 101 | 12.5804 | 11.2358 | 16.184 |
| 102 | 12.7466 | 11.4116 | 15.842 |
| 103 | 12.9119 | 11.5672 | 15.501 |
| 104 | 13.0760 | 11.7624 | 15.162 |

(continued)

| Crank Angle | Top Sealer Down by | Bottom Sealer Up by | Gap |
|---|---|---|---|
| Φ | 1'-t > 1' | 2'-b > 2' | |
| 105 | 13.2391 | 11.9373 | 14.824 |
| 106 | 13.4009 | 12.1118 | 14.487 |
| 107 | 13.5616 | 12.2858 | 14.153 |
| 108 | 13.7211 | 12.4593 | 13.820 |
| 109 | 13.8792 | 12.6321 | 13.489 |
| 110 | 14.0360 | 12.8044 | 13.160 |
| 111 | 14.1915 | 12.9759 | 12.833 |
| 112 | 14.3456 | 13.1466 | 12.508 |
| 113 | 14.4982 | 13.3165 | 12.185 |
| 114 | 14.6493 | 13.4855 | 11.865 |
| 115 | 14.7989 | 13.6535 | 11.548 |
| 116 | 14.9469 | 13.8205 | 11.233 |
| 117 | 15.0933 | 13.9865 | 10.920 |
| 118 | 15.2382 | 14.1513 | 10.611 |
| 119 | 15.3613 | 14.3149 | 10.304 |
| 120 | 15.5227 | 14.4773 | 10.000 |
| 121 | 15.6624 | 14.6383 | 9.699 |
| 122 | 15.8004 | 14.7980 | 9.402 |
| 123 | 15.9365 | 14.9563 | 9.107 |
| 124 | 16.0708 | 15.1130 | 8.816 |
| 125 | 16.2033 | 15.2683 | 8.528 |
| 126 | 16.3338 | 15.4219 | 8.244 |
| 127 | 16.4625 | 15.5738 | 7.964 |
| 128 | 16.5891 | 15.7241 | 7.687 |
| 129 | 16.7138 | 15.8726 | 7.414 |
| 130 | 16.8366 | 16.0192 | 7.144 |
| 131 | 16.9572 | 16.1640 | 6.879 |
| 132 | 17.0758 | 16.3068 | 6.617 |
| 133 | 17.1924 | 16.4476 | 6.360 |
| 134 | 17.3068 | 16.5863 | 6.107 |
| 135 | 17.4191 | 16.7230 | 5.858 |
| 136 | 17.5293 | 16.8575 | 5.613 |
| 137 | 17.6373 | 16.9898 | 5.373 |
| 138 | 17.7431 | 17.1198 | 5.137 |
| 139 | 17.8466 | 17.2476 | 4.906 |
| 140 | 17.9479 | 17.3729 | 4.679 |
| 141 | 18.0470 | 17.4959 | 4.457 |
| 142 | 18.1438 | 17.6164 | 4.240 |

(continued)

| Crank Angle | Top Sealer Down by | Bottom Sealer Up by | Gap |
|---|---|---|---|
| Φ | 1'-t > 1' | 2'-b > 2' | |
| 143 | 18.2383 | 17.7344 | 4.027 |
| 144 | 18.3305 | 17.8498 | 3.820 |
| 145 | 18.4203 | 17.9627 | 3.617 |
| 146 | 18.5079 | 18.0729 | 3.419 |
| 147 | 18.5930 | 18.1804 | 3.227 |
| 148 | 18.6758 | 18.2852 | 3.039 |
| 149 | 18.7561 | 18.3872 | 2.857 |
| 150 | 18.8341 | 18.4864 | 2.679 |
| 151 | 18.9096 | 18.5828 | 2.508 |
| 152 | 18.9827 | 18.6763 | 2.341 |
| 153 | 19.0533 | 18.7668 | 2.180 |
| 154 | 19.1215 | 18.8544 | 2.024 |
| 155 | 19.1872 | 18.9389 | 1.874 |
| 156 | 19.2504 | 19.0205 | 1.729 |
| 157 | 19.3111 | 19.0989 | 1.590 |
| 158 | 19.3694 | 19.1743 | 1.456 |
| 159 | 19.4250 | 19.2466 | 1.328 |
| 160 | 19.4782 | 19.3156 | 1.206 |
| 161 | 19.5288 | 19.3815 | 1.090 |
| 162 | 19.5769 | 19.4442 | 0.979 |
| 163 | 19.6224 | 19.5037 | 0.874 |
| 164 | 19.6654 | 19.5598 | 0.775 |
| 165 | 19.7058 | 19.6127 | 0.681 |
| 166 | 19.7436 | 19.6623 | 0.594 |
| 167 | 19.7789 | 19.7086 | 0.513 |
| 168 | 19.8115 | 19.7515 | 0.437 |
| 169 | 19.8416 | 19.7910 | 0.367 |
| 170 | 19.8690 | 19.8271 | 0.304 |
| 171 | 19.8939 | 19.8599 | 0.246 |
| 172 | 19.9161 | 19.8892 | 0.195 |
| 173 | 19.9358 | 19.9151 | 0.149 |
| 174 | 19.9528 | 19.9376 | 0.110 |
| 175 | 19.9672 | 19.9567 | 0.076 |
| 176 | 19.9790 | 19.9723 | 0.049 |
| 177 | 19.9882 | 19.9844 | 0.027 |
| 178 | 19.9948 | 19.9931 | 0.012 |
| 179 | 19.9987 | 19.9983 | 0.003 |
| 180 | 20.0000 | 20.0000 | 0.000 |

Table-2

| Crank Angle | Top Sealer Down by | Bottom Sealer Up by | Gap |
|---|---|---|---|
| Φ | 1'-t > 1' | 2'-b > 2' | |
| 180 | 20.0000 | 20.0000 | 0.000 |
| 181 | 19.9987 | 19.9983 | 0.003 |
| 182 | 19.9948 | 19.9931 | 0.012 |
| 183 | 19.9882 | 19.9844 | 0.027 |
| 184 | 19.9790 | 19.9723 | 0.049 |
| 185 | 19.9672 | 19.9567 | 0.076 |
| 186 | 19.9528 | 19.9376 | 0.110 |
| 187 | 19.9358 | 19.9151 | 0.149 |
| 188 | 19.9161 | 19.8892 | 0.195 |
| 189 | 19.8939 | 19.8599 | 0.246 |
| 190 | 19.8690 | 19.8271 | 0.304 |
| 191 | 19.8416 | 19.7910 | 0.367 |
| 192 | 19.8115 | 19.7515 | 0.437 |
| 193 | 19.7789 | 19.7086 | 0.513 |
| 194 | 19.7436 | 19.6623 | 0.594 |
| 195 | 19.7058 | 19.6127 | 0.681 |
| 196 | 19.6654 | 19.5598 | 0.775 |
| 197 | 19.6224 | 19.5037 | 0.874 |
| 198 | 19.5769 | 19.4442 | 0.979 |
| 199 | 19.5288 | 19.3815 | 1.090 |
| 200 | 19.4782 | 19.3156 | 1.206 |
| 201 | 19.4250 | 19.2466 | 1.328 |
| 202 | 19.3694 | 19.1743 | 1.456 |
| 203 | 19.3111 | 19.0989 | 1.590 |
| 204 | 19.2504 | 19.0205 | 1.729 |
| 205 | 19.1872 | 18.9389 | 1.874 |
| 206 | 19.1215 | 18.8544 | 2.024 |
| 207 | 19.0533 | 18.7668 | 2.180 |
| 208 | 18.9827 | 18.6763 | 2.341 |
| 209 | 18.9096 | 18.5828 | 2.508 |
| 210 | 18.8341 | 18.4864 | 2.679 |
| 211 | 18.7561 | 18.3872 | 2.857 |
| 212 | 18.6758 | 18.2852 | 3.039 |
| 213 | 18.5930 | 18.1804 | 3.227 |
| 214 | 18.5079 | 18.0729 | 3.419 |
| 215 | 18.4203 | 17.9627 | 3.617 |
| 216 | 18.3305 | 17.8498 | 3.820 |
| 217 | 18.2383 | 17.7344 | 4.027 |

(continued)

| Crank Angle | Top Sealer Down by | Bottom Sealer Up by | Gap |
|---|---|---|---|
| Φ | 1'-t > 1' | 2'-b > 2' | |
| 218 | 18.1438 | 17.6164 | 4.240 |
| 219 | 18.0470 | 17.4959 | 4.457 |
| 220 | 17.9479 | 17.3729 | 4.679 |
| 221 | 17.8466 | 17.2476 | 4.906 |
| 222 | 17.7431 | 17.1198 | 5.137 |
| 223 | 17.6373 | 16.9898 | 5.373 |
| 224 | 17.5293 | 16.8575 | 5.613 |
| 225 | 17.4191 | 16.7230 | 5.858 |
| 226 | 17.3066 | 16.5863 | 6.107 |
| 227 | 17.1924 | 16.4476 | 6.360 |
| 228 | 17.0758 | 16.3068 | 6.617 |
| 229 | 16.9572 | 16.1640 | 6.879 |
| 230 | 16.8366 | 16.0192 | 7.144 |
| 231 | 16.7138 | 15.8726 | 7.414 |
| 232 | 16.5891 | 15.7241 | 7.687 |
| 233 | 16.4625 | 15.5738 | 7.964 |
| 234 | 16.3338 | 15.4219 | 8.244 |
| 235 | 16.2033 | 15.2683 | 8.528 |
| 236 | 16.0708 | 15.1130 | 8.816 |
| 237 | 15.9365 | 14.9563 | 9.107 |
| 238 | 15.8004 | 14.7980 | 9.402 |
| 239 | 15.6624 | 14.6383 | 9.699 |
| 240 | 15.5227 | 14.4773 | 10.000 |
| Φ | 1'-t > 1 | 2'-b > 2' | |
| 241 | 15.3613 | 14.3149 | 10.304 |
| 242 | 15.2382 | 14.1513 | 10.611 |
| 243 | 15.0933 | 13.9865 | 10.920 |
| 244 | 14.9469 | 13.8205 | 11.233 |
| 245 | 14.7989 | 13.6535 | 11.548 |
| 246 | 14.6493 | 13.4855 | 11.865 |
| 247 | 14.4982 | 13.3165 | 12.185 |
| 248 | 14.3456 | 13.1466 | 12.508 |
| 249 | 14.1915 | 12.9759 | 12.833 |
| 250 | 14.0360 | 12.8044 | 13.160 |
| 251 | 13.8792 | 12.6321 | 13.489 |
| 252 | 13.7211 | 12.4593 | 13.820 |
| 253 | 13.5616 | 12.2858 | 14.153 |
| 254 | 13.4009 | 12.1118 | 14.487 |

(continued)

| Φ | 1'-t > 1 | 2'-b > 2' | |
|---|---|---|---|
| 255 | 13.2391 | 11.9373 | 14.824 |
| 256 | 13.0760 | 117624 | 15.162 |
| 257 | 12.9119 | 11.5672 | 15.501 |
| 258 | 12.7466 | 11.4116 | 15.842 |
| 259 | 12.5804 | 11.2358 | 16.184 |
| 260 | 12.4132 | 11.0598 | 16.527 |
| 261 | 12.2450 | 10.8837 | 16.871 |
| 262 | 12.0760 | 10.7075 | 17.217 |
| 263 | 11.9061 | 10.5313 | 17.563 |
| 264 | 11.7354 | 10.3551 | 17.909 |
| 265 | 11.5641 | 10.1791 | 18.257 |
| 266 | 11.3920 | 10.0032 | 18.605 |
| 267 | 11.2193 | 9.8275 | 18.953 |
| 268 | 11.0460 | 9.6520 | 19.302 |
| 269 | 10.8721 | 9.4769 | 19.651 |
| 270 | 10.6978 | 9.3022 | 20.000 |
| 271 | 10.5231 | 9.1279 | 20.349 |
| 272 | 10.3480 | 8.9540 | 20.698 |
| 273 | 10.1725 | 8.7807 | 21.047 |
| 274 | 9.9968 | 8.6080 | 21.395 |
| 275 | 98209 | 8.4359 | 21.743 |
| 276 | 9.6449 | 8.2646 | 22.091 |
| 277 | 9.4687 | 8.0939 | 22.437 |
| 278 | 9.2925 | 7.9240 | 22.783 |
| 279 | 9.1163 | 7.7550 | 23.129 |
| 280 | 8.9402 | 7.5868 | 23.473 |
| 281 | 8.7642 | 7.4196 | 23.816 |
| 282 | 8.5884 | 7.2534 | 24.158 |
| 283 | 8.4128 | 7.0881 | 24.499 |
| 284 | 8.2376 | 6.9240 | 24.838 |
| 285 | 8.0627 | 6.7609 | 25.176 |
| 286 | 7.8882 | 6.5991 | 25.513 |
| 287 | 7.7142 | 6.4384 | 25.847 |
| 288 | 7.5407 | 6.2789 | 26.180 |
| 289 | 7.3679 | 6.1208 | 26.511 |
| 290 | 7.1956 | 5.9640 | 26.840 |
| 291 | 7.0241 | 5.8085 | 27.167 |
| 292 | 6.8534 | 5.6544 | 27.492 |
| 293 | 6.6835 | 5.5018 | 27.815 |

(continued)

| Φ | 1'-t > 1 | 2'-b > 2' | |
|---|---|---|---|
| 294 | 6.5145 | 5.3507 | 28.135 |
| 295 | 6.3465 | 5.2011 | 28.452 |
| 296 | 6.1795 | 5.0531 | 28.767 |
| 297 | 6.0135 | 4.9067 | 29.080 |
| 298 | 5.8487 | 4.7618 | 29.389 |
| 299 | 5.6851 | 4.6187 | 29.696 |
| 300 | 5.5227 | 4.4773 | 30.000 |
| 301 | 5.3617 | 4.3376 | 30.301 |
| 302 | 5.2020 | 4.1996 | 30.598 |
| 303 | 5.0437 | 4.0635 | 30.893 |
| 304 | 4.8870 | 3.9292 | 31.184 |
| 305 | 4.7317 | 3.7967 | 31.472 |
| 306 | 4.5781 | 3.6662 | 31.756 |
| 307 | 4.4262 | 3.5375 | 32.036 |
| 308 | 4.2759 | 3.4109 | 32.313 |
| 309 | 4.1274 | 3.2862 | 32.586 |
| 310 | 3.9808 | 3.1634 | 32.856 |
| 311 | 3.8360 | 3.0428 | 33.121 |
| 312 | 3.6932 | 2.9242 | 33.383 |
| 313 | 3.5524 | 2.8076 | 33.640 |
| 314 | 3.4137 | 2.6932 | 33.893 |
| 315 | 3.2770 | 2.5809 | 34.142 |
| 316 | 3.1425 | 2.4707 | 34.387 |
| 317 | 3.0102 | 2.3627 | 34.627 |
| 318 | 2.8802 | 2.2569 | 34.863 |
| 319 | 2.7524 | 2.1534 | 35.094 |
| 320 | 2.6271 | 2.0521 | 35.321 |
| 321 | 2.5041 | 1.9530 | 35.543 |
| 322 | 2.3836 | 1.8562 | 35.760 |
| 323 | 2.2656 | 1.7617 | 35.973 |
| 324 | 2.1502 | 1.6695 | 36.180 |
| 325 | 2.0373 | 1.5797 | 36.383 |
| 326 | 1.9271 | 1.4921 | 36.581 |
| 327 | 1.8196 | 14070 | 36.773 |
| 328 | 1.7148 | 1.3242 | 36.961 |
| 329 | 1.6128 | 1.2439 | 37.143 |
| 330 | 1.5136 | 1.1659 | 37.321 |
| 331 | 1.4172 | 1.0904 | 37.492 |
| 332 | 1.3237 | 1.0173 | 37.659 |

(continued)

| Φ | 1'-t > 1 | 2'-b > 2' | |
|---|---|---|---|
| 333 | 1.2332 | 0.9467 | 37.820 |
| 334 | 1.1456 | 0.8785 | 37.976 |
| 335 | 1.0611 | 0.8128 | 38.126 |
| 336 | 0.9795 | 0.7496 | 38.271 |
| 337 | 0.9011 | 0.6889 | 38.410 |
| 338 | 0.8257 | 0.6306 | 38.544 |
| 339 | 0.7534 | 0.5750 | 38.672 |
| 340 | 0.6844 | 0.5218 | 38.794 |
| 341 | 0.6185 | 0.4712 | 38.910 |
| 342 | 0.5558 | 0.4231 | 39.021 |
| 343 | 0.4963 | *0.3776* | 39.126 |
| 344 | 0.4402 | 0.3346 | 39.225 |
| 345 | 0.3873 | 0.2942 | 39.319 |
| 346 | 0.3377 | 0.2564 | 39.406 |
| 347 | 0.2914 | 0.2211 | 39.487 |
| 348 | 0.2485 | 0.1885 | 39.563 |
| 349 | 0.2090 | 0.1584 | 39.633 |
| 350 | 0.1729 | 0.1310 | 39.696 |
| 351 | 0.1401 | 0.1061 | 39.754 |
| 352 | 0.1108 | 0.0839 | 39.805 |
| 353 | 0.0849 | 0.0642 | 39.851 |
| 354 | 0.0624 | 0.0472 | 39.890 |
| 355 | 0.0433 | 0.0328 | 39.924 |
| 356 | 0.0277 | 0.0210 | 39.951 |
| 357 | 0.0156 | 0.0118 | 39.973 |
| 358 | 0.0069 | 0.0052 | 39.988 |
| 359 | 0.0017 | 0.0013 | 39.997 |
| 360 | 0.0000 | 0.0000 | 40.000 |

This concept is applied in multi-purpose sealing module (20) where very small movements at the ends of stroke can be used for its low impact and a gentle touch characteristic for sealing the plastic films without damage or deterioration, even while the common drive shaft (30) is having same angular speed throughout the cycle.

Example 2

In Example 2, torque considered is 50 Nm, eccentricity value (E) considered is 10 mm, length of crank arms (60a, 60b) and crank arms (70a, 70b) considered is 72 mm. Force generated at the end of crank arms (60a, 60b) and crank arms (70a, 70b) against each degree of angular movement Ø of the eccentric cams (40a, 40b) and eccentric cams (50a, 50b) due to torque applied on the common drive shaft (30) are tabulated in Table-3.

Table-3

| Crank Degree | Force ( N ) |
|---|---|
| 0.0001 | 2 51 54 24 466 |

(continued)

| Crank Degree | Force ( N ) |
|---:|---:|
| 1 | 2 51 560 |
| 2 | 1 25 806 |
| 3 | 83 900 |
| 4 | 62 955 |
| 5 | 50 395 |
| 6 | 42 028 |
| 7 | 36 056 |
| 8 | 31 582 |
| 9 | 28 106 |
| 10 | 25 328 |
| 11 | 23 059 |
| 12 | 21 171 |
| 13 | 19 576 |
| 14 | 18 212 |
| 15 | 17 032 |
| 16 | 16 002 |
| 17 | 15 095 |
| 18 | 14 291 |
| 19 | 13 573 |
| 20 | 12 930 |
| 21 | 12 349 |
| 22 | 11 823 |
| 23 | 11 344 |
| 24 | 10 907 |
| 25 | 10 506 |
| 26 | 10 138 |
| 27 | 9 798 |
| 28 | 9 485 |
| 29 | 9 194 |
| 30 | 8 924 |
| 31 | 8 673 |
| 32 | 8 439 |
| 33 | 8 220 |
| 34 | 8 016 |
| 35 | 7 824 |
| 36 | 7 645 |
| 37 | 7 476 |
| 38 | 7 318 |
| 39 | 7 168 |

(continued)

| Crank Degree | Force ( N ) |
|---:|---:|
| 40 | 7 028 |
| 41 | 6 895 |
| 42 | 6 771 |
| 43 | 6 653 |
| 44 | 6 541 |
| 45 | 6 436 |
| 46 | 6 336 |
| 47 | 6 242 |
| 48 | 6 153 |
| 49 | 6 069 |
| 50 | 5989 |
| 51 | 5 914 |
| 52 | 5 842 |
| 53 | 5 775 |
| 54 | 5 711 |
| 55 | 5 651 |
| 56 | 5 594 |
| 57 | 5 540 |
| 58 | 5 489 |
| 59 | 5 441 |
| 60 | 5 396 |
| 61 | 5 354 |
| 62 | 5 314 |
| 63 | 5 276 |
| 64 | 5 241 |
| 65 | 5 209 |
| 66 | 5 178 |
| 67 | 5 150 |
| 68 | 5 124 |
| 69 | 5 100 |
| 70 | 5 078 |
| 71 | 5 057 |
| 72 | 5 039 |
| 73 | 5 023 |
| 74 | 5 008 |
| 75 | 4 995 |
| 76 | 4 984 |
| 77 | 4 975 |
| 78 | 4 967 |

(continued)

| Crank Degree | Force ( N ) |
|---:|---:|
| 79 | 4 961 |
| 80 | 4 956 |
| 81 | 4 954 |
| 82 | 4 952 |
| 83 | 4 953 |
| 84 | 4 955 |
| 85 | 4 958 |
| 86 | 4 964 |
| 87 | 4 970 |
| 88 | 4 979 |
| 89 | 4 989 |
| 90 | 5 000 |
| 91 | 5 013 |
| 92 | 5 028 |
| 93 | 5 044 |
| 94 | 5 062 |
| 95 | 5 081 |
| 96 | 5 102 |
| 97 | 5 125 |
| 98 | 5 150 |
| 99 | 5 176 |
| 100 | 5 204 |
| 101 | 5 234 |
| 102 | 5 265 |
| 103 | 5 299 |
| 104 | 5 334 |
| 105 | 5 371 |
| 106 | 5 410 |
| 107 | 5 452 |
| 108 | 5 495 |
| 109 | 5 541 |
| 110 | 5 589 |
| 111 | 5 639 |
| 112 | 5 691 |
| 113 | 5 746 |
| 114 | 5 804 |
| 115 | 5 864 |
| 116 | 5 927 |
| 117 | 5 992 |

(continued)

| Crank Degree | Force ( N ) |
| --- | --- |
| 118 | 6 061 |
| 119 | 6 133 |
| 120 | 6 208 |
| | |
| 121 | 6 286 |
| 122 | 6 368 |
| 123 | 6 453 |
| 124 | 6 543 |
| 125 | 6 636 |
| 126 | 6 734 |
| 127 | 6 836 |
| 128 | 6 942 |
| 129 | 7 054 |
| 130 | 7 171 |
| 131 | 7 293 |
| 132 | 7 422 |
| 133 | 7 556 |
| 134 | 7 697 |
| 135 | 7 845 |
| 136 | 8 001 |
| 137 | 8 164 |
| 138 | 8 337 |
| 139 | 8 518 |
| 140 | 8 709 |
| 141 | 8 911 |
| 142 | 9 124 |
| 143 | 9 349 |
| 144 | 9 587 |
| 145 | 9 840 |
| 146 | 10 109 |
| 147 | 10 395 |
| 148 | 10 699 |
| 149 | 11 024 |
| 150 | 11 371 |
| 151 | 11 743 |
| 152 | 12 143 |
| 153 | 12 572 |
| 154 | 13 036 |
| 155 | 13 538 |

(continued)

| Crank Degree | Force ( N ) |
|---:|---:|
| 156 | 14 083 |
| 157 | 14 676 |
| 158 | 15 323 |
| 159 | 16 034 |
| 160 | 16 816 |
| 161 | 17 682 |
| 162 | 18 646 |
| 163 | 19 723 |
| 164 | 20 937 |
| 165 | 22 314 |
| 166 | 23 889 |
| 167 | 25 708 |
| 168 | 27 831 |
| 169 | 30 342 |
| 170 | 33 358 |
| 171 | 37 045 |
| 172 | 41 657 |
| 173 | 47 589 |
| 174 | 55 501 |
| 175 | 66 581 |
| 176 | 83 207 |
| 177 | 110 922 |
| 178 | 1 66 360 |
| 179 | 3 32 694 |
| 179.9999 | 3 32 68 51 714 |
|  |  |

This concept is applied in multi-purpose sealing module (20) where large amount of force at sealing beams can be generated and is utilized for sealing a variety of film thicknesses.

Example 3

In Example 3, the eccentricity value (E) considered is 10 mm for the eccentric cams (40a, 40b) the eccentric cams (50a, 50b). Maximum Gap value settable is (2xE1 + 2xE2). In this Example, Maximum Gap will be 40 mm against each Control Gap dimension as input value, the degree of angular movement Ø of the eccentric cams (40a, 40b) the eccentric cams (50a, 50b) is tabulated in Table-4.

Table-4

| Gap | Crank Degree | Gap | Crank Degree | Gap | Crank Degree | Gap | Crank Degree |
|---|---:|---|---:|---|---:|---|---:|
| 0.00 | 0.0000 | 10.25 | 60.8236 | 20.50 | 91.4325 | 30.75 | 122.5136 |
| 0.25 | 9.0687 | 10.50 | 61.6406 | 20.75 | 92.1491 | 31.00 | 123.3670 |
| 0.50 | 12.8386 | 10.75 | 62.4515 | 21.00 | 92.8660 | 31.25 | 124.2289 |

(continued)

| Gap | Crank Degree | Gap | Crank Degree | Gap | Crank Degree | Gap | Crank Degree |
|---|---|---|---|---|---|---|---|
| 0.75 | 15.7405 | 11.00 | 63.2563 | 21.25 | 93.5833 | 31.50 | 125.0996 |
| 1.00 | 18.1949 | 11.25 | 64.0555 | 21.50 | 94.3012 | 31.75 | 125.9798 |
| 1.25 | 20.3641 | 11.50 | 64.8493 | 21.75 | 95.0198 | 32.00 | 126.8699 |
| 1.50 | 22.3316 | 11.75 | 65.6380 | 22.00 | 95.7392 | 32.25 | 127.7705 |
| 1.75 | 24.1468 | 12.00 | 66.4218 | 22.25 | 96.4594 | 32.50 | 128.6822 |
| 2.00 | 25.8419 | 12.25 | 67.2010 | 22.50 | 97.1808 | 32.75 | 129.6057 |
| 2.25 | 27.4392 | 12.50 | 67.9757 | 22.75 | 97.9032 | 33.00 | 130.5416 |
| 2.50 | 28.9550 | 12.75 | 68.7462 | 23.00 | 98.6269 | 33.25 | 131.4908 |
| 2.75 | 30.4015 | 13.00 | 69.5127 | 23.25 | 99.3520 | 33.50 | 132.4542 |
| 3.00 | 31.7883 | 13.25 | 70.2754 | 23.50 | 100.0787 | 33.75 | 133.4325 |
| 3.25 | 33.1229 | 13.50 | 71.0344 | 23.75 | 100.8069 | 34.00 | 134.4270 |
| 3.50 | 34.4115 | 13.75 | 71.7900 | 24.00 | 101.5370 | 34.25 | 135.4387 |
| 3.75 | 35.6591 | 14.00 | 72.5424 | 24.25 | 102.2689 | 34.50 | 136.4688 |
| 4.00 | 36.8699 | 14.25 | 73.2917 | 24.50 | 103.0029 | 34.75 | 137.5189 |
| 4.25 | 38.0475 | 14.50 | 74.0380 | 24.75 | 103.7390 | 35.00 | 138.5904 |
| 4.50 | 39.1950 | 14.75 | 74.7815 | 25.00 | 104.4775 | 35.25 | 139.6851 |
| 4.75 | 40.3149 | 15.00 | 75.5225 | 25.25 | 105.2185 | 35.50 | 140.8050 |
| 5.00 | 41.4096 | 15.25 | 76.2610 | 25.50 | 105.9620 | 35.75 | 141.9525 |
| 5.25 | 42.4811 | 15.50 | 76.9971 | 25.75 | 106.7083 | 36.00 | 143.1301 |
| 5.50 | 43.5312 | 15.75 | 77.7311 | 26.00 | 107.4576 | 36.25 | 144.3409 |
| 5.75 | 44.5613 | 16.00 | 78.4630 | 26.25 | 108.2100 | 36.50 | 145.5885 |
| 6.00 | 45.5730 | 16.25 | 79.1931 | 26.50 | 108.9656 | 36.75 | 146.8771 |
| 6.25 | 46.5675 | 16.50 | 79.9213 | 26.75 | 109.7246 | 37.00 | 148.2117 |
| 6.50 | 47.5458 | 16.75 | 80.6480 | 27.00 | 110.4873 | 37.25 | 149.5985 |
| 6.75 | 48.5092 | 17.00 | 81.3731 | 27.25 | 111.2538 | 37.50 | 151.0450 |
| 7.00 | 49.4584 | 17.25 | 82.0968 | 27.50 | 112.0243 | 37.75 | 152.5608 |
| 7.25 | 50.3943 | 17.50 | 82.8192 | 27.75 | 112.7990 | 38.00 | 154.1581 |
| 7.50 | 51.3178 | 17.75 | 83.5406 | 28.00 | 113.5782 | 38.25 | 155.8532 |
| 7.75 | 52.2295 | 18.00 | 84.2608 | 28.25 | 114.3620 | 38.50 | 157.6684 |
| 8.00 | 53.1301 | 18.25 | 84.9802 | 28.50 | 115.1507 | 38.75 | 159.6 359 |
| 8.25 | 54.0202 | 18.50 | 85.6988 | 28.75 | 115.9445 | 39.00 | 161.8051 |
| 850 | 54.9004 | 18.75 | 86.4167 | 29.00 | 116.7437 | 39.25 | 164.2595 |
| 8.75 | 55.7711 | 19.00 | 87.1340 | 29.25 | 117.5485 | 39.50 | 167.1614 |
| 9.00 | 56.6330 | 19.25 | 87.8509 | 29.50 | 118.3594 | 39.75 | 170.9313 |
| 9.25 | 57.4864 | 19.50 | 88.5675 | 29.75 | 119.1764 | 40.00 | 180.0000 |
| 9.50 | 58.3318 | 19.75 | 89.2838 | 30.00 | 120.0000 | | |
| 9.75 | 59.1695 | 20.00 | 90.0000 | 30.25 | 120.8305 | | |
| 10.00 | 60.0000 | 20.25 | 90.7162 | 30.50 | 121.6682 | | |

This concept is applied in multi-purpose sealing module (20) where controlled gap between the upper seal beam (140) and the lower seal beam (150) can be generated and utilized for sealing of a variety of plastic film thicknesses as per requirement.

The multi-purpose sealing module (20) utilizes a common crank and crank arm mechanism innovatively for generating high seal force for some applications; very slow motion at the end of stroke for gentle sealing touch while sealing, moving upper seal beam (140) and lower seal beam (150) simultaneously by a common drive shaft (30) making it a well-balanced system capable to run at high speeds using which controlled Gaps can be generated for sealing of a variety of plastic film thicknesses as per requirements.

The description with the appended drawings is not intended to represent the only forms that may be developed or utilized using the inventive concept disclosed. It is to be understood that the disclosed embodiments are exemplary of the disclosure that may be embodied in various and alternative forms. Therefore, specific structural and functional details disclosed herein are not to be interpreted as limiting, but merely as a representative for teaching one skilled in the art to variously employ the present invention. The scope of the invention is defined by the appended claims.

**Claims**

1. A multi-purpose sealing module (20) for a machine (10) to manufacture heat-sealed plastic film based bags and pouches, comprising

   a. a servo motor driven common drive shaft (30) in keyed connection with eccentric cams (40a, 40b) and eccentric cams (50a, 50b) such that eccentricity is equal and in opposite directions;
   b. crank arms (60a, 60b) connected to the eccentric cams (40a, 40b) though bearings (80a, 80b) and through bearings (120a, 120b) to linear guide rods (100a, 100b);
   c. the linear guide rods (100a, 100b) in connection with upper seal beam (140);
   d. crank arms (70a, 70b) connected to the eccentric cams (50a, 50b) though bearings (90a, 90b) and through bearings (130a, 130b) to Connecting Rods (110a, 110b);
   e. the Connecting Rods (110a, 110b) in rigid connection with lower seal beam (150);
   f. movement of the lower seal beam (150) guided by the linear guide rods (100a, 100b); and
   g. angular movement of the drive shaft (30) giving simultaneous linear movement in opposite directions to the upper seal beam (140) and the lower seal beam (150) controlling the gap between a sealing jaw connected to the upper seal beam (140) and a sealing jaw connected to the lower seal beam (150); and seal time and seal pressure of sealing of plastic film based bags and pouches; and angular movement of the drive shaft (30) controlled by a programmable controller;

   **characterised in that** the linear guide rods (100a, 100b) are in rigid connection with the upper seal beam (140).

2. The multi-purpose sealing module (20) as claimed in claim 1 wherein the common drive shaft (30) is driven by pneumatic rotary actuators.

3. The multi-purpose sealing module (20) as claimed in claim 1 wherein the common drive shaft (30) is connected with eccentric cams (40a, 40b) and eccentric cams (50a, 50b) using clamping bushes.

4. A multi-purpose sealing module (220) for a machine (210) to manufacture heat-sealed plastic film based bags and pouches, comprising:

   a. a servo motor driven common drive shaft (230) in keyed connection with eccentric cams (240a, 240b) and eccentric cams (250a, 250b) such that eccentricity is equal and in opposite directions;
   b. crank arms (260a, 260b) connected to the eccentric cams (240a, 240b) though bearings (280a, 280b) and through bearings (320a, 320b) to linear guide rods (300a, 300b);
   c. the linear guide rods (300a, 300b) in connection with front seal beam (340);
   d. crank arms (270a, 270b) connected to the eccentric cams (250a, 250b) though bearings (290a, 290b) and through bearings (330a, 330b) to Connecting Rods (310a, 310b);
   e. the Connecting Rods (310a, 310b) in rigid connection with rear seal beam (350);
   f. movement of the rear seal beam (350) guided by the linear guide rods (300a, 300b); and
   g. angular movement of the drive shaft (230) giving simultaneous linear movement in opposite directions to the front seal beam (340) and the rear seal beam (350) controlling the gap between a sealing jaw connected to the front seal beam (340) and a sealing jaw connected to the rear seal beam (350); and seal time and seal pressure of sealing of plastic film based bags and pouches; and angular movement of the drive shaft (230) controlled by a programmable controller;

**characterised in that** the linear guide rods (300a, 300b) are in rigid connection with the front seal beam (340).

5.  The multi-purpose sealing module (220) as claimed in claim 4 wherein the common drive shaft (230) is driven by pneumatic rotary actuators.

6.  The multi-purpose sealing module (220) as claimed in claim 4 wherein the common drive shaft (230) is connected with eccentric cams (240a, 240b) and eccentric cams (250a, 250b) using clamping bushes.

**Patentansprüche**

1.  Mehrzweckverschweißungsmodul (20) für eine Maschine (10) zum Herstellen von wärmeverschweißten, kunststofffolienbasierten Tüten und Beuteln, umfassend:

    a. eine servomotorgetriebene gemeinsame Antriebswelle (30) in verkeilter Verbindung mit exzentrischen Nocken (40a, 40b) und exzentrischen Nocken (50a, 50b), sodass die Exzentrizität in entgegengesetzten Richtungen gleich ist;
    b. Kurbelarme (60a, 60b), die mit den exzentrischen Nocken (40a, 40b) über Lager (80a, 80b) und über Lager (120a, 120b) mit linearen Führungsstangen (100a, 100b) verbunden sind;
    c. die linearen Führungsstangen (100a, 100b) in Verbindung mit einer oberen Schweißleiste (140);
    d. Kurbelarme (70a, 70b), die mit den exzentrischen Nocken (50a, 50b) über Lager (90a, 90b) und über Lager (130a, 130b) mit Verbindungsstangen (110a, 110b) verbunden sind;
    e. die Verbindungsstangen (110a, 110b) in starrer Verbindung mit einer unteren Schweißleiste (150);
    f. eine Bewegung der unteren Schweißleiste (150), die durch die linearen Führungsstangen (100a, 100b) geführt wird; und
    g. eine Winkelbewegung der Antriebswelle (30), die eine simultane lineare Bewegung in entgegengesetzten Richtungen für die obere Schweißleiste (140) und die untere Schweißleiste (150) erzeugt, wodurch der Spalt zwischen einer Schweißbacke, die mit der oberen Schweißleiste (140) verbunden ist, und einer Schweißbacke, die mit der unteren Schweißleiste (150) verbunden ist, gesteuert wird; und eine Schweißzeit und ein Schweißdruck zum Verschweißen von kunststofffolienbasierten Tüten und Beuteln; und eine Winkelbewegung der Antriebswelle (30), die durch eine programmierbare Steuerungseinheit gesteuert wird;

    **dadurch gekennzeichnet, dass** die linearen Führungsstangen (100a, 100b) in starrer Verbindung mit der oberen Schweißleiste (140) stehen.

2.  Mehrzweckverschweißungsmodul (20) nach Anspruch 1, wobei die gemeinsame Antriebswelle (30) durch pneumatische Drehaktuatoren getrieben wird.

3.  Mehrzweckverschweißungsmodul (20) nach Anspruch 1, wobei die gemeinsame Antriebswelle (30) unter Verwendung von Spannbuchsen mit exzentrischen Nocken (40a, 40b) und exzentrischen Nocken (50a, 50b) verbunden ist.

4.  Mehrzweckverschweißungsmodul (220) für eine Maschine (210) zum Herstellen von wärmeverschweißten, kunststofffolienbasierten Tüten und Beuteln, umfassend:

    a. eine servomotorgetriebene gemeinsame Antriebswelle (230) in verkeilter Verbindung mit exzentrischen Nocken (240a, 240b) und exzentrischen Nocken (250a, 250b), sodass die Exzentrizität in entgegengesetzten Richtungen gleich ist;
    b. Kurbelarme (260a, 260b), die mit den exzentrischen Nocken (240a, 240b) über Lager (280a, 280b) und über Lager (320a, 320b) mit linearen Führungsstangen (300a, 300b) verbunden sind;
    c. die linearen Führungsstangen (300a, 300b) in Verbindung mit einer vorderen Schweißleiste (340);
    d. Kurbelarme (270a, 270b), die mit den exzentrischen Nocken (250a, 250b) über Lager (290a, 290b) und über Lager (330a, 330b) mit Verbindungsstangen (310a, 310b) verbunden sind;
    e. die Verbindungsstangen (310a, 310b) in starrer Verbindung mit einer hinteren Schweißleiste (350);
    f. Bewegung der hinteren Schweißleiste (350), die durch die linearen Führungsstangen (300a, 300b) geführt wird; und

g. eine Winkelbewegung der Antriebswelle (230), die eine simultane lineare Bewegung in entgegengesetzten Richtungen für die vordere Schweißleiste (340) und die hintere Schweißleiste (350) erzeugt, wodurch der Spalt zwischen einer Schweißbacke, die mit der vorderen Schweißleiste (340) verbunden ist, und einer Schweißbacke, die mit der hinteren Schweißleiste (350) verbunden ist, gesteuert wird; und eine Schweißzeit und ein Schweißdruck zum Verschweißen von kunststofffolienbasierten Tüten und Beuteln; und eine Winkelbewegung der Antriebswelle (230), die durch eine programmierbare Steuerungseinheit gesteuert wird;

**dadurch gekennzeichnet, dass** die linearen Führungsstangen (300a, 300b) in starrer Verbindung mit der vorderen Schweißleiste (340) stehen.

5. Mehrzweckverschweißungsmodul (220) nach Anspruch 4, wobei die gemeinsame Antriebswelle (230) durch pneumatische Drehaktuatoren getrieben wird.

6. Mehrzweckverschweißungsmodul (220) nach Anspruch 4, wobei die gemeinsame Antriebswelle (230) unter Verwendung von Spannbuchsen mit exzentrischen Nocken (240a, 240b) und exzentrischen Nocken (250a, 250b) verbunden ist.

**Revendications**

1. Module de scellage polyvalent (20) pour une machine (10) servant à fabriquer des sacs et sachets à base de film plastique thermoscellés, comprenant

a. un arbre d'entraînement commun (30) entraîné par un servomoteur, raccordé par clavetage à des cames excentriques (40a, 40b) et des cames excentriques (50a, 50b) de telle sorte que l'excentricité soit égale et dans des sens opposés ;
b. des bras de manivelle (60a, 60b) raccordés aux cames excentriques (40a, 40b) par le biais de paliers (80a, 80b) et par le biais de paliers (120a, 120b) à des tiges de guidage linéaires (100a, 100b) ;
c. les tiges de guidage linéaires (100a, 100b) raccordées à une barre de scellage supérieure (140) ;
d. des bras de manivelle (70a, 70b) raccordés aux cames excentriques (50a, 50b) par le biais de paliers (90a, 90b) et par le biais de paliers (130a, 130b) à des bielles (110a, 110b) ;
e. les bielles (110a, 110b) raccordées de manière rigide à une barre de scellage inférieure (150) ;
f. un mouvement de la barre de scellage inférieure (150) guidé par les tiges de guidage linéaires (100a, 100b) ; et
g. un mouvement angulaire de l'arbre d'entraînement (30) imprimant un mouvement linéaire simultané dans des sens opposés à la barre de scellage supérieure (140) et à la barre de scellage inférieure (150) régulant l'écartement entre une mâchoire de scellage raccordée à la barre de scellage supérieure (140) et une mâchoire de scellage raccordée à la barre de scellage inférieure (150) ; et un temps de scellage et une pression de scellage pour le scellage de sacs et sachets à base de film plastique ; et un mouvement angulaire de l'arbre d'entraînement (30) commandés par un automate programmable ;

**caractérisé en ce que** les tiges de guidage linéaires (100a, 100b) sont raccordées de manière rigide à la barre de scellage supérieure (140).

2. Module de scellage polyvalent (20) selon la revendication 1, dans lequel l'arbre d'entraînement commun (30) est entraîné par des actionneurs rotatifs pneumatiques.

3. Module de scellage polyvalent (20) selon la revendication 1, dans lequel l'arbre d'entraînement commun (30) est raccordé aux cames excentriques (40a, 40b) et aux cames excentriques (50a, 50b) au moyen de bagues de serrage.

4. Module de scellage polyvalent (220) pour une machine (210) servant à fabriquer des sacs et sachets à base de film plastique thermoscellés, comprenant :

a. un arbre d'entraînement commun (230) entraîné par un servomoteur, raccordé par clavetage à des cames excentriques (240a, 240b) et des cames excentriques (250a, 250b) de telle sorte que l'excentricité soit égale et dans des sens opposés ;
b. des bras de manivelle (260a, 260b) raccordés aux cames excentriques (240a, 240b) par le biais de paliers (280a, 280b) et par le biais de paliers (320a, 320b) à des tiges de guidage linéaires (300a, 300b) ;
c. les tiges de guidage linéaires (300a, 300b) raccordées à une barre de scellage avant (340) ;

d. des bras de manivelle (270a, 270b) raccordés aux cames excentriques (250a, 250b) par le biais de paliers (290a, 290b) et par le biais de paliers (330a, 330b) à des bielles (310a, 310b) ;

e. les bielles (310a, 310b) raccordées de manière rigide à une barre de scellage arrière (350) ;

f. un mouvement de la barre de scellage arrière (350) guidé par les tiges de guidage linéaires (300a, 300b) ; et

g. un mouvement angulaire de l'arbre d'entraînement (230) imprimant un mouvement linéaire simultané dans des sens opposés à la barre de scellage avant (340) et à la barre de scellage arrière (350) régulant l'écartement entre une mâchoire de scellage raccordée à la barre de scellage avant (340) et une mâchoire de scellage raccordée à la barre de scellage arrière (350) ; et un temps de scellage et une pression de scellage pour le scellage de sacs et sachets à base de film plastique ; et un mouvement angulaire de l'arbre d'entraînement (230) commandés par un automate programmable ;

**caractérisé en ce que** les tiges de guidage linéaires (300a, 300b) sont raccordées de manière rigide à la barre de scellage avant (340).

5. Module de scellage polyvalent (220) selon la revendication 4, dans lequel l'arbre d'entraînement commun (230) est entraîné par des actionneurs rotatifs pneumatiques.

6. Module de scellage polyvalent (220) selon la revendication 4, dans lequel l'arbre d'entraînement commun (230) est raccordé aux cames excentriques (240a, 240b) et aux cames excentriques (250a, 250b) au moyen de bagues de serrage.

Fig. 1

**Fig. 2**

(210)

Fig. 3

Fig. 4

Fig. 5

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6550255 B1
- US 20220242080 A1
- US 4753629 A
- EP 3374153 A1
- AT 502740 A2